# EUROPEAN PATENT SPECIFICATION

(11) **EP 3 296 915 B1**
(45) Date of publication and mention of the grant of the patent: **12.10.2022**
(21) Application number: 17187837.4
(22) Date of filing: 24.08.2017
(51) Int. Cl.: G06F 21/85, G06F 21/70

(54) **SYSTEMS AND METHODS FOR DYNAMICALLY ASSIGNING DOMAIN IDENTIFIERS FOR ACCESS CONTROL**
SYSTEME UND VERFAHREN ZUR DYNAMISCHEN ZUWEISUNG VON DOMÄNENIDENTIFIKATOREN ZUR ZUGRIFFSKONTROLLE
SYSTÈMES ET PROCÉDÉS D'ATTRIBUTION DYNAMIQUE D'IDENTIFICATEURS DE DOMAINE POUR UN CONTRÔLE D'ACCÈS

(30) Priority: 14.09.2016 US 201615264865
(43) Date of publication of application: 21.03.2018
(73) Proprietor: NXP USA, Inc., Austin TX 78735 (US)
(72) Inventor: Circello, Joseph C., Redhill, Surrey RH1 1QZ (GB); Lundahl, Michael E., Redhill, Surrey RH1 1QZ (GB)
(74) Representative: Miles, John Richard

(56) References cited:
- US-A1- 2011 055 435
- US-A1- 2016 210 260
- US-A1- 2016 259 750

## Description

### Background

### Field

This disclosure relates generally to computer processors, and more specifically, to a computer processor with the capability to dynamically assign domain identifiers for access control.

### Related Art

A resource domain controller in a data processing system includes information that groups various resources, such as bus masters, memory devices, and peripherals, into common domains. Each group can be referred to as a resource domain and can include one or more data processors, memory devices, and peripheral devices. The resource domain information, therefore, assigns data processors, memory devices, and peripherals of a data processing system to one or more resource domains.

In the past, domain assignments were static and could not be changed dynamically. It is desirable to not only support dynamic domain assignments to multiple domains, but also to provide a robust access control policy for system bus transactions among multiple processors.

US 2011/055435 A1 describes a data processor that provides an access protection during data transfer control according to a transfer condition set by CPU. The data processor has: CPU; a memory management section operable to control data transfer by CPU; and a transfer controller operable to control data transfer. The transfer controller holds identification information which the memory management section uses for access protection. When producing an address for transfer according to the setting of CPU, the transfer controller starts data transfer on condition that the identification information corresponding to the address for transfer matches the identification information of CPU at the setting of a transfer condition, etc.

US 2016/210260 A1 describes a resource domain controller in a data processing system that stores information that is used to group various resources, such as bus masters and peripherals, into common domains. Each group can be referred to as a resource domain and can include one or more data processor and peripheral devices. The resource domain information is then used to determine whether a particular access request from a data processor is authorized to access its intended target, e.g., one of the peripheral devices, by determining whether the access request and the intended target each belong to a common resource domain. If so, the access request is allowed, otherwise the access request is prevented from being successfully completed.

US 2016/259750 A1 describes a system and method for providing adaptive access to a hardware block on a computer system. A method includes receiving a first access request and a second access request with an access controller, wherein the second access request is received sequentially after the first access request, and the first access request includes a first master identification and the second access request includes a second master identification, determining if the second master identification is equal to the first master identification, providing access to the second access request if the second master identification is equal to the first master identification, wherein the first master identification is associated with one or more hardware block interface values, invalidating the one or more hardware block interface values associated with the first master identification if the second master identification is not equal to the first master identification, and associating the one or more hardware block interface values with the second master identification and a corresponding privilege.

### Summary of the Invention

According to an aspect of the invention, there is provided a resource domain controller according to claim 1.

Further features according to embodiments of the invention are set out in the dependent claims.

### Brief Description of the Drawings

The present disclosure is illustrated by way of example and is not limited by the accompanying figures, in which like references indicate similar elements. Elements in the figures are illustrated for simplicity and clarity and have not necessarily been drawn to scale.
FIG. 1 is a block diagram of a processing system in accordance with selected embodiments of the invention.
FIG. 2 illustrates examples of master domain assignment controller registers for processor and non-processor resources that may be used in the processing system of FIG. 1.
FIG. 3 illustrates an example of inputs and outputs for each master domain assignment controller in accordance with selected embodiments of the invention.
FIG. 4 illustrates a block diagram of a method for generating an output domain identifier for a processor resource in accordance with selected embodiments of the invention.

### Detailed Description

In embodiments disclosed herein, an Extended Resource Domain Controller (XRDC) is provided with dynamic domain assignments and an integrated, scalable architectural framework for access control, system memory protection, and peripheral isolation. Software assigns chip resources including processor cores, non-core bus masters, memory regions, and slave peripherals to processing domains to support enforcement of robust operational environments. Each bus mastering resource is assigned to a domain identifier (domainID, DID). For processors, there are additional fields that can optionally be used to dynamically assign the processor to multiple domains. Next, the access control policies for the individual domains are programmed into any number of slave memory region descriptors and slave peripheral domain access control registers. All accesses throughout the device are then monitored concurrently to determine the validity of each and every access. If a reference from a given domain has sufficient access rights, it is allowed to continue, otherwise the access is aborted and error information is captured.

In selected embodiments, an access control scheme used in the XRDC supports four levels, combining the traditional privileged and user modes with an additional signal defining the secure attributes of each memory reference. The result is a four level hierarchical access control mechanism, where the attributes have different access control policies based on read, write and execute references. Combined with the privileged/nonprivileged and secure/nonsecure attributes, a domain identifier is associated with every system bus transaction and provides a basis for implementing access control mechanisms.

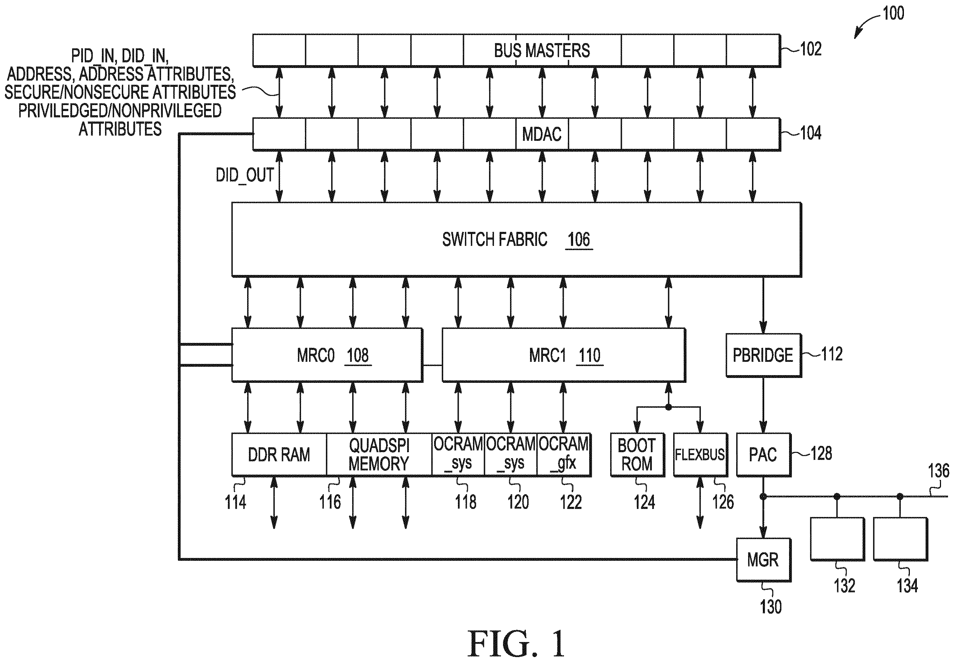

FIG. 1 is a block diagram of a processing system 100 in accordance with selected embodiments of the invention that includes a multitude of bus masters 102, with each bus master 102 configured to communicate with a corresponding instance of master domain assignment controller (MDAC) 104 via a suitable communication link. Parameters communicated between bus masters 102 and MDAC 104 include process identifiers, domain identifiers, memory addresses, memory address attributes, and access attributes such as secure/nonsecure and privileged/nonprivileged attributes, among others. MDACs 104 are configured to communicate with memory region checkers (MRCs) 108, 110 via a switch fabric 106 that routes requests and responses between bus master 102 and MDAC 104 and MRCs 108, 110.

Various memory devices can be coupled to communicate with MRCs 108, 110 including one or more random access memory (RAM) devices, such as double data rate (DDR) RAM module 114, quad serial peripheral interface (QUADSPI) memory 116, system on-chip RAM modules 118, 120, graphics on-chip RAM module 122, boot read only memory (ROM) module 124, and flexible bus module 126. Boot ROM 124 stores code that is executed when a processor is powered up. Flexible bus module 126 allows external devices to be connected to system 100, such as external memory devices, programmable logic devices, or other suitable devices. A communication bus, such as an Advanced Microcontroller Bus Architecture (AMBA) bus, Advanced High-performance Bus (AHB) bus, and/or Advanced Extensible Interface (AXI) bus, can be included to allow memory modules 114-122, boot ROM 124 and flexible bus 126 to communicate with MRCs 108, 110. Other suitable types and number of memory and bus devices can be included in system 100 in addition to, or instead of, the examples of memory devices shown in FIG. 1.

Peripheral bridge (PBRIDGE) 112 can be included to allow additional one or more components to communicate with peripherals 132, 134 in system 100. Peripheral access controller (PAC) 128 is coupled between peripheral bridge 112 and manager module 130. PAC 128 controls access to peripherals 132, 134 by bridge 112 via a communication bus 136, which may be, for example, an advanced peripheral bus or other suitable communication bus. PAC 128 receives requests to access peripherals 132, 134 via bridge 112, and sends responses from peripherals 132, 134 to bridge 112.

Manager module (MGR) 130 routes all accesses of the XRDC programming model to the appropriate destination submodule to configure and control the MDACs 104, MRCs 108, 110 as well as PAC 128. A number of other slave peripherals 132, 134, such as printers, display monitors, phones, thumb drives, and other types of peripheral devices can be accessed. Data flow for accesses to memory regions is controlled by bus master 102 to MDAC 104 to switch fabric 106 to MRC 108, 110 to the appropriate memory controller (114-126). Conversely, the data flow for accesses to slave peripherals is controlled by bus master 102 to MDAC 104 to switch fabric 106 to peripheral bridge 112 to PAC 128 to slave peripheral 130, 132, 134.

Each instance of MDAC 104 generates a domain identifier for every transaction of bus masters 102 and can include multiple master domain assignment (MDA) registers associated with different process identifiers. If there is a single MDA register in a MDAC 104 for a given bus master 102, then the specified domain identifier is used directly. If there are multiple MDA registers for a given bus master 102, then a MDAC 104 evaluates the process identifiers in the registers to determine whether an incoming process identifier matches a process identifier in one of the registers in the corresponding instance of MDAC 104. This referred to as a process identifier "hit". For all the "hits", the corresponding domain identifiers in the registers are logically summed together using a Boolean OR operation, for example, to generate the domain identifier. Use cases are typically expected to hit a single MDA register for a bus master 102 at any instant in time. Domain identifiers are dynamically generated based on the contents of the MDA registers and one or more other system register states.

To generate dynamic domain identifiers, one or more MDA registers for a bus master 102 are pre-programmed during system initialization and startup, to specify hit conditions, as further described below. A bus master runtime register state is used by comparison logic in MDAC 104. MDAC 104 compares a specific signal to register fields and associated hit logic to generate a domain identifier. The domain identifier is then treated as an address attribute, passed through switch fabric 106 and used by downstream access control mechanisms in MRCs 108, 110 and PAC 128 to grant or deny access to memory and peripheral devices in system 100.

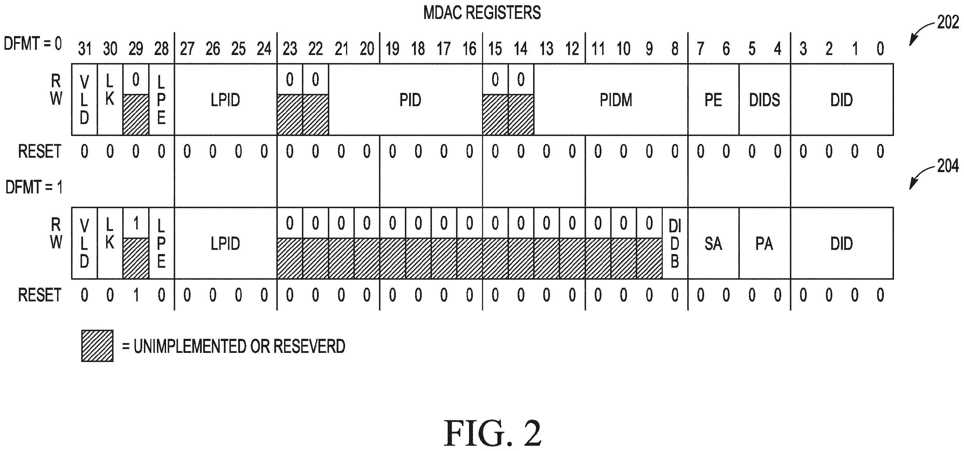

Referring to FIGs. 1 and 2, FIG. 2 illustrates an example of MDA register 202 for processor bus masters 102, and an example of MDA register 204 for non-processor bus masters 102 that may be used in the processing system 100 of FIG. 1. MDA registers 202, 204 provide a two-dimensional data structure for assigning bus masters 102 to domains. In one implementation, for example, there are up to eight 32 bit word-sized registers available for each bus master 102, although a different number may be used. The per-master domain assignment is repeated for each bus master 102. MDACs 104 generate domain identifiers for every transaction from every bus master 102. If there is a single register for a given bus master 102, then the specified domain identifier is used directly. A single register is expected to be used for a non-processor bus master, for example. If there are multiple registers for a given bus master 102, MDACs 104 evaluate terms in the MDA registers to determine a "hit", i.e., whether a process identifier of an incoming transaction matches a process identifier in a register field within the MDA register 202 that is currently part of system 100. For all register hits, the corresponding domain identifiers are logically summed together, using a Boolean OR function, for example. If none of the terms "hit" in a given register evaluation, the generated domain identifier is null or zero.

In selected embodiments, MDA register 202 for processor resources includes 32 bits that are allocated to the fields shown in the following Table 1:

**TABLE 1: MDA register 202 For Processor Resources**

| Field | Description |
|---|---|
| 31 VLD | Valid bit. Indicates whether domain assignment is valid (VLD = 1) or invalid (VLD = 0). |
| 30 LK | Lock bit. This field indicates whether the MDA register can be written (LK = 0) or is read-only (LK = 1) until the next reset event. |
| 29 DFMT | Domain format. This field identifies the register as a processor core domain assignment (DFMT = 0) or a non-processor domain assignment (DFMT = 1). For MDA register 202, DFMT = 0. |
| 28 LPE | Logical partition enable. If system 100 uses virtualization-aware storage, this field enables the inclusion of a logical partition identifier to be included in the domain hit evaluation. Note: subsequent discussions on the Boolean evaluations involving PID and PIDM to determine domain hit assume that LPE = 0. |
| | 0 - The LPID field is not included in the domain hit evaluation. |
| | 1 - The LPID field is included in the domain hit evaluation. |
| 27-24 LPID | Logical partition Identifier. If system uses virtualization-aware storage, this 4-bit field defines an optional logical partition identifier (as known as an operating system number) to be included in the domain hit evaluation. |
| 21-16 PID | Process Identifier (DFMT = 0 only). This field defines the process identifier to be combined with the PIDM field and included in the domain hit determination as a function. The optional inclusion of the PID and PIDM is controlled by the PE field. |
| 13-8 PIDM | Process Identifier Mask (DFMT = 0 only). This field provides a masking capability so that multiple process identifiers can be included as part of the domain hit determination. If a bit in the PIDM is set, then the corresponding bit of the PID is ignored in the comparison. The optional inclusion of the PID and PIDM is controlled by the PE field. |
| 7-6 PE | Process identifier enable (DFMT = 0 only). This 2-bit field controls the optional inclusion of the PID, qualified by PIDM, into the domain hit evaluation. It provides the ability to include inclusive or exclusive sets of masked PID values. |
| | The expressions below assume LPE = 0. |
| | 00 - No process identifier is included in the domain hit evaluation |
| | 10 - The process identifier is included in the domain hit evaluation as defined by the expression: |
| | partial_domain_hit = (PE[7:6] == 10) && ((PID[21:16] & ~PIDM[13:8]) == (PID & ~PIDM[13:8])) |
| | 11 - The process identifier is included in the domain hit evaluation as defined by the expression: |
| | partial_domain_hit = (PE[7:6] == 11) && ~((PID[21:16] & ~PIDM[13:8]) == (PID & ~PIDM[13:8])) |
| 5-4 DIDS | DID Select (DFMT = 0 only). This 2-bit field selects the source of the domain identifier. |
| | 00 - Use MDAn[3:0] as the domain identifier. |
| | 01 - Use the input DID as the domain identifier. |
| | 10 - Use bits MDAn[3:2] concatenated with the low-order 2 bits of the input DID (DID_in[1:0]) as the domain identifier. |
| | 11 - Reserved for future use. |
| 3-0 DID | Domain Identifier. |

In selected embodiments, MDA register 204 for non-processor resources includes 32 bits that are allocated to the fields shown in the following Table 2:

**TABLE 2: MDA register 204 For Non-Processor Resources**

| Field | Description |
|---|---|
| 31 VLD | Indicates whether domain assignment is valid (VLD = 1) or invalid (VLD = 0). |
| 30 LK | Lock bit. This field indicates whether the MDA register can be written (LK = 0) or is read-only (LK = 1) until the next reset event. |
| 29 DFMT | Domain format. This field identifies the register as a processor core domain assignment (DFMT = 0) or a non-processor domain assignment (DFMT = 1). For MDA register 204, DFMT = 1. |
| 28 LPE | Logical partition enable. If system 100 uses virtualization-aware storage, this field enables the inclusion of a logical partition identifier to be included in the domain hit evaluation. |
| | 0 - The LPID field is not included in the domain hit evaluation. |
| | 1 - The LPID field is included in the domain hit evaluation |
| 27-24 LPID | Logical partition Identifier. If system uses virtualization-aware storage, this 4-bit field defines an optional logical partition identifier (as known as an operating system number) to be included in the domain hit evaluation. |
| 8 DIDB | DID Bypass (DFMT=1 only). If asserted, this bit enables the bypassing of an input domain identifier value as the domain identifier for a non-processor bus master. This capability allows non-processor bus masters, for example, a direct memory access bus master, to masquerade as a processor. Once set, this field is "sticky" and remains set until the next reset. |
| | 0 - Use MDA register bits [3:0] as the domain identifier. |
| | 1 - Use the input DID as the domain identifier. |
| 7-6 SA | Secure attribute (DFMT = 1 only). This 2-bit field defines the secure/nonsecure attribute for non-processor cores. |
| | 00 - Force the bus attribute for this master to secure. |
| | 01 - Force the bus attribute for this master to nonsecure. |
| | 1x - Use the bus master's secure/nonsecure attribute directly. The bus master's input secure/nonsecure attribute is used if SA = 1-, or VLD = 0. |
| 5-4 PA | Privileged attribute (DFMT = 1 only). This 2-bit field defines the privileged/user attribute for non-processor cores. |
| | 00 Force the bus attribute for this master to user. |
| | 01 Force the bus attribute for this master to privileged. |
| | 1x - Use the bus master's privileged/user attribute directly. |
| | The bus master's input privileged/user attribute is used if PA = 1-, or this VLD = 0. |
| 3-0 DID | Domain Identifier. |

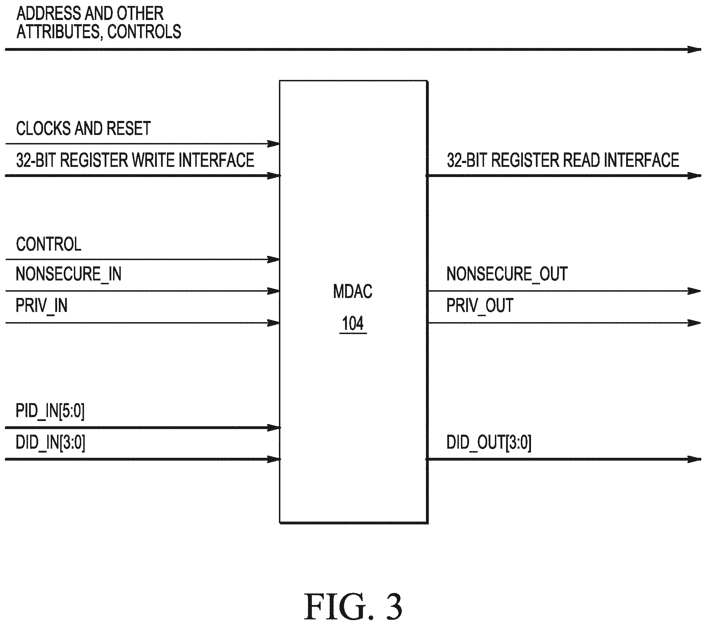

Referring to FIGs 1-3, FIG. 3 illustrates an example of inputs and outputs for each MDAC 104 in accordance with selected embodiments of the invention. MDAC 104 includes one or more MDA registers for every bus master 102 in system 100. Each instance of MDAC 104 supports a number of parameters that are device-specific, including parameters defining the instance number, the number of implemented domains, the number of MDA registers per corresponding bus master 102, whether the corresponding bus master 102 is a processor, whether a PID value is input, and whether memory virtualization support is included. This configuration information is defined via hardware design parameters and/or specific control input signals. Also note the reference address and other attribute signals pass directly from bus master 102 to switch fabric 106 without passing through MDAC 104.

Further device-specific configuration customization is possible via the input signal connections, as required.

In the example shown, inputs include clock and reset signals, 32 bits of data to be written to a register in MDAC 104, control information, a secure/nonsecure indicator (nonsecure_in), a privileged/nonprivileged indicator (priv_in), an input process identifier (pid_in[5:0]), and an input domain identifier (did_in[3:0]). Output includes 32 bits of data read from a register in MDAC 104, an output secure/nonsecure indicator (nonsecure_out), an output privileged/nonprivileged indicator (priv_out), and an output domain identifier (did_out[3:0]).

The following C code, evaluate_MDA, is an example of a software description to generate a domain identifier and determine whether there is a "hit" in each of MDA registers for processor resources, that is, whether a process identifier of an incoming transaction matches the process identifier on one or more of the MDA registers for a processor bus master 102:

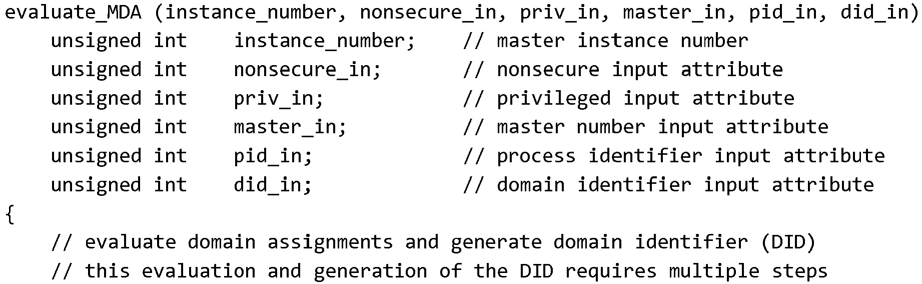

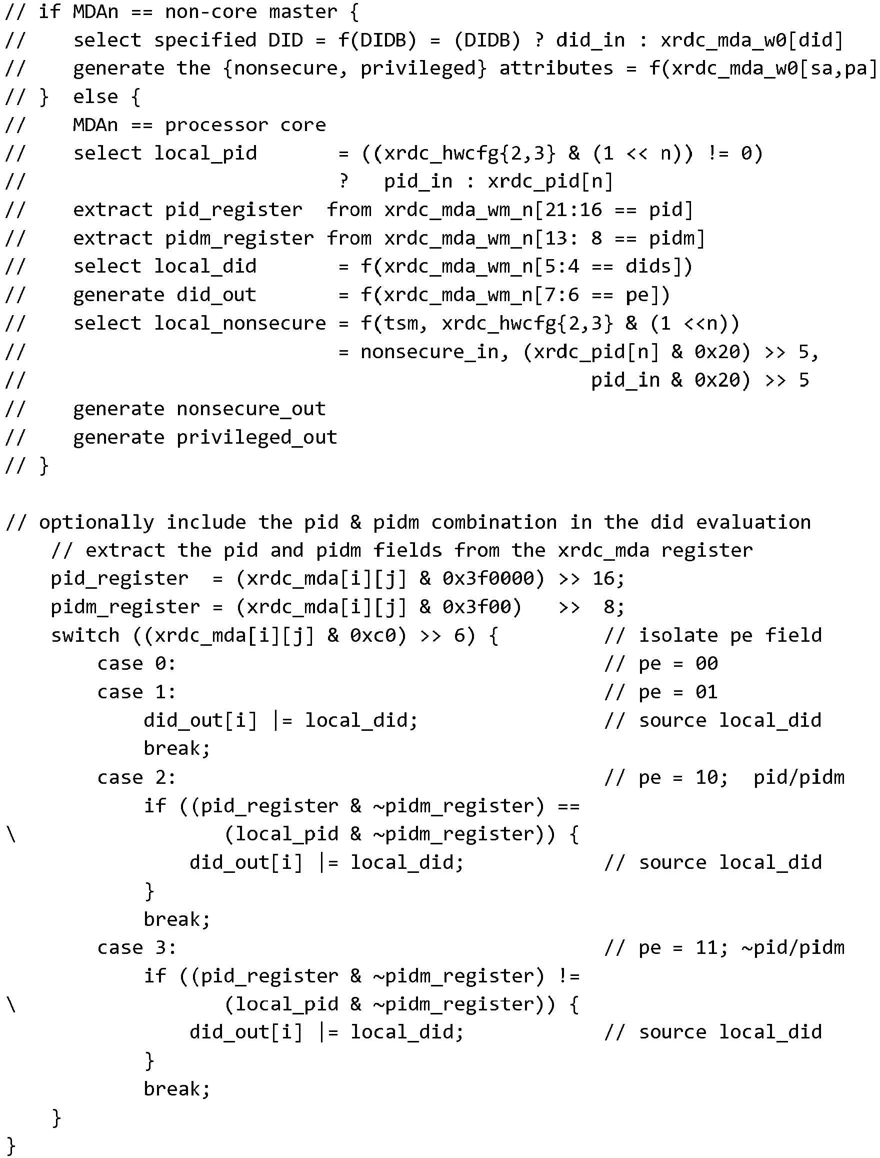

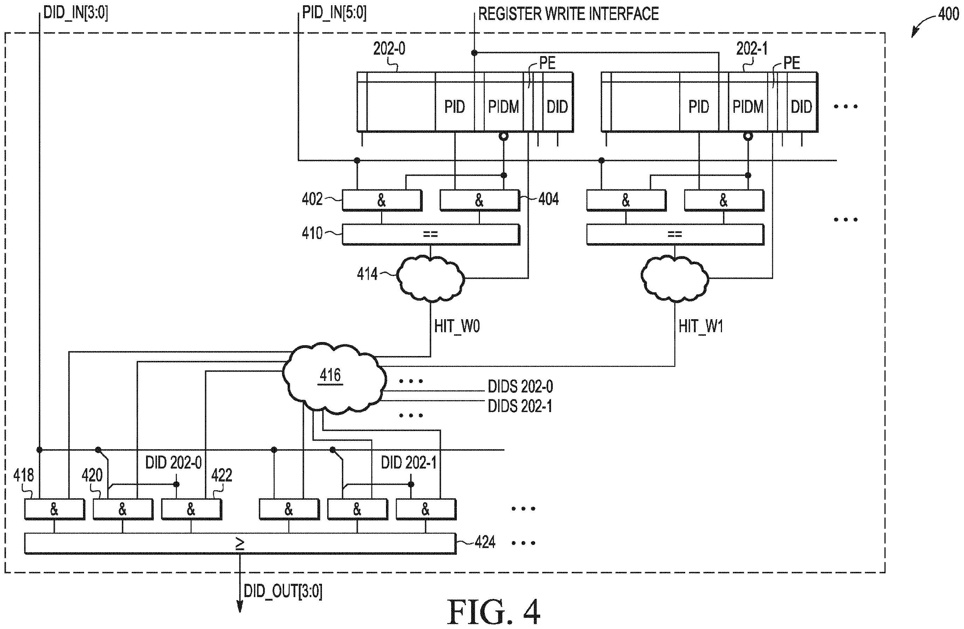

FIG. 4 illustrates a block diagram of a method 400 for generating an output domain identifier for a processor resource in accordance with selected embodiments of the invention. For each MDA register 202-0, 202-1...up to the number of registers for a given domain identifier in MDAC 104, the input process identifier (PID_IN[5:0]) for the transaction is combined with the complement of the process identifier mask (PIDM[13:8]) in the register 202-0, 202-1 in AND circuit 402. Additionally, the process identifier (PID[21:16]) from each register 202-0, 202-1 is combined with the complement of the process identifier mask (PIDM[13:8]) in the register 202-0, 202-1 in AND circuit 404. The output of AND circuits 402, 404 are compared to one another in an equality compare circuit 410 to provide an indicator of whether there is a match between the input PID and the register PID combined with the PIDM in register 202-0, 202-1. The output of compare circuit 410 and the process identifier enable field (PE[7:6]) from each MDA register 202-0 are provided to a corresponding process hit evaluation circuit 414. In process hit evaluation circuit 414, the process identifier enable (PE) field from registers 202-0 and 202-1 controls the optional inclusion of the PID, qualified by a respective process identifier mask (PIDM), into a process hit evaluation circuit 414.

As indicated in the example in Table 1 hereinabove, if the process identifier enable field is set to a first value, e.g. "00", no process identifier is included in the process hit evaluation. If the process identifier enable field is set to a second value, e.g. "10", the process identifier is included in the process hit evaluation as defined by the expression partial_domain_hit = (PE[7:6] == 10) && ((PID[21:16] & ~PIDM[13:8]) == (PID & ~PIDM[13:8])). If the process identifier enable field is set to a third value, e.g., "11", the process identifier is included in the process hit evaluation as defined by the expression: partial_domain_hit = (PE[7:6] == 11) && ~((PID[21:16] & ~PIDM[13:8]) == (PID & ~PIDM[13:8])).

The output of process hit evaluation circuit 414 for each register 202-0, 202-1 is provided to domain evaluation circuit 416 along with the domain identifier select (DIDS) field in bits [5:4] of the corresponding MDA registers 202-0, 202-1. Domain hit evaluation circuit 416 includes circuitry to select the source of the domain identifier based on the DIDS[5:4] field. As an example for register 202-0, if the domain identifier select field of register 202-0 is set to a first value, e.g., "00", the domain identifier in bits [3:0] of register 202-0 is used for the domain identifier. Combiner circuit 422 combines the domain identifier in DID [3:0] of register 202-0 with output of domain evaluation circuit 416. If the domain identifier select field of register 202-0 is set to a second value, e.g., "01", the input domain identifier (DID_IN[3:0]) is used for the domain identifier. Combiner circuit 418 combines the input domain identifier (DID_IN[3:0]) with output of domain evaluation circuit 416. If the domain identifier select field is set to a third value, e.g., "10", DID [3:2] of register 202-0 concatenated with the low-order 2 bits of the input domain identifier is used for the domain identifier. Combiner circuit 420 combines the concatenated domain identifier with corresponding output of domain evaluation circuit 416. Combiner circuit 424 provides the logical summation across all the implemented MDAn registers to generate a summation of all the "hit" conditions.

As an example of the operation of system 100 with two domains, let a first domain identifier (e.g., "DID=1") correspond to critical tasks and a second domain identifier (e.g., "DID=2") correspond to non-critical tasks. An example of a critical task can be a task that monitors an electric meter in a hospital, while non-critical tasks would be all other tasks performed by system 100. Other critical tasks, and other criteria for grouping tasks, can be used, however. Since there are two domains, there would typically be two corresponding registers in MDAC 104. Further, let the processor's task identifier define the critical task with a PID equal to a value between 0 and 15, and the PID for non-critical tasks is assigned a value that is not between 0 and 15. Software initializes registers 202-0, 202-1 in MDAC 104 during startup as follows:
Register 202-0 = 0x8000_0F81, // VLD, PID = 0x0, PIDM = 0xF, PE = 2, DIDS = 0, DID = 1
Register 202-1 = 0x8000_0FC2, // VLD, PID = 0x0, PIDM = 0xF, PE = 3, DIDS = 0, DID = 2

As a processor coupled to system 100 executes, an appropriate task identifier is loaded into a corresponding PID register of processor 102 as the task is started. The processor's PID register value is input to MDAC 104 and used by multiple logic functions within system 100 (FIG. 1), as shown and described for FIG. 4. For tasks with PID greater than or equal to 0 and less than or equal to 15, register 202-0 "hits" and the domain identifier is "1". For tasks with a PID greater than 15, then register 202-1 "hits" and the output domain identifier is "2".

System 100 then supports the dynamic generation of multiple (in this case, two) domain identifiers and the downstream access check logic can distinguish and enforce different access control rights based on the different domain identifiers.

By now it should be appreciated that there has been provided in selected embodiments, a master domain assignment controller (MDAC) (104) can comprise a first plurality of registers (202) corresponding to a first processor 102. The first plurality of registers can comprise a first register corresponding to a first set of process identifiers (PIDs) and a second register corresponding to a second set of PIDs. Comparison circuitry can be coupled to receive an input process identifier (PID) from the first processor and configured to determine if the input PID is one of the first set or the second set of PIDs. When the input PID is one of the first set of PIDs, a first output domain identifier (DID) is generated, and when the input PID is one of the second set of PIDs, a second output DID different from the first output DID is generated.

In one embodiment, the first register can be configured to store a first group identifier (e.g., PID, PIDM, and PE) which identifies the first set of PIDs and the second register is configured to store a second group identifier (e.g., PID, PIDM, and PE) which identifies the second set of PIDs, wherein the comparison circuitry is configured to use the first group identifier to determine if the input PID is one of the first set of PIDs and the second group identifier to determine if the input PID is one of the second set of PIDs.

In one embodiment, the first group identifier can include a first PID and a first PID mask, and the second group identifier can include a second PID and a second PID mask. The comparison circuitry can be configured to use the first PID masked by the first PID mask to determine if the input PID is one of the first set of PIDs and the second PID masked by the second PID mask to determine if the input PID is one of the second set of PIDs.

In one embodiment, the first group identifier can include a first PID enable indicator. The comparison circuitry can be configured to: when the first PID enable indicator has a first value, the input PID is one of the first set of PIDs, if the first PID masked by the first PID mask matches the input PID masked by the first PID mask, and when the first PID enable indicator has a second value, the input PID is one of the first set of PIDs if the first PID masked by the first PID mask does not match the input PID masked by the first PID mask.

In one embodiment, the second group identifier can be configured to store a second PID enable indicator, wherein the comparison circuitry can be configured to: when the second PID enable indicator has the first value (e.g. 10), the input PID is one of the second set of PIDs if the second PID masked by the second PID mask matches the input PID masked by the second PID mask, and when the second PID enable indicator has the second value (e.g., 11), the input PID is one of the second set of PIDs if the second PID masked by the second PID mask does not match the input PID masked by the second PID mask.

In one embodiment, the first register can be configured to store a first DID and the second register is configured to store a second DID, wherein: when the input PID is one of the first set of PIDs, the first output DID is generated using the first DID (e.g., DID select = 01 or 10), and when the input PID is one of the second set of PIDs, the second output DID is generated using the second DID (e.g., DID select = 01 or 10).

In one embodiment, the first register is configured to store a first DID and a first DID select and the second register is configured to store a second DID and a second DID select, wherein: when the input PID is one of the first set of PIDs, the first output DID is generated using the first DID select and at least one of the first DID and an input DID received from the processor (e.g., DID select = 00, 01, or 10), and when the input PID is one of the second set of PIDs, the second output DID is generated using the second DID select and at least one of the second DID and the input DID.

In one embodiment, when the input PID is one of the first set of PIDs and the first DID select has a first value (e.g., 00), the first DID is provided as the first output domain identifier (DID), and when the input PID is one of the first set of PIDs and the first DID select has a second value (e.g., 01), an input DID received from the processor is provided as the first output DID.

In one embodiment, when the input PID is one of the first set of PIDs and the first DID select has a third value (e.g., 10), a combination of the first DID and an input DID received from the processor is provided as the first output DID.

In one embodiment, the first master provides the first input PID and an input DID to the MDAC, and an address and address attributes to the switch fabric, and the MDAC provides the first output DID to the switch fabric.

In one embodiment, each group identifier of the first MDAC instance can include a PID and a PID mask, wherein the comparison circuitry determines which register of the plurality of registers results in a hit using the PIDs and PID masks.

In one embodiment, each group identifier of the first MDAC instance can include a PID enable indicator, wherein the comparison circuitry determines which register of the plurality of registers results in a hit using the PIDs, the PID masks, and the PID enable indicators. If the PID enable indicator stored in the hit register has a first value, the PID stored in the hit register masked by the PID mask stored in the hit register matches the first input PID masked by the PID mask stored in the hit register, and if the PID enable indicator stored in the hit register has a second value, the PID stored in the hit register masked by the PID mask stored in the hit register does not match the first input PID masked by the PID mask stored in the hit register.

In one embodiment, each register of the plurality of registers of the first MDAC instance is configured to store a DID and a DID select, wherein the first output DID is generated using the DID select stored in the hit register and at least one of the DID stored in the hit register and an input DID received from the processor.

In still further selected embodiments, in a master domain assignment controller (MDAC) having a plurality of registers, wherein each register is configured to store a group identifier which identifies a set of process identifiers (PIDs), a method comprises: receiving an input PID, and determining if a hit occurs with a register of the plurality of registers using the group identifier of each register. When a hit is determined of a hit register of the plurality of registers which indicates that the input PID is one of the set of PIDs identified by the hit register, an output DID is generated using the hit register.

In one embodiment, the group identifier of each register can include a corresponding PID and PID mask, wherein the determining if the hit occurs with the register of the plurality of registers using the group identifier of each register is performed by using the PID and PID mask of each register.

In one embodiment, the group identifier of each register can include a corresponding PID enable indicator, wherein the determining if the hit occurs with the register of the plurality of registers further comprises: when the corresponding PID enable indicator has a first value and the corresponding PID masked by the corresponding PID mask matches the input PID masked by the corresponding PID mask, a hit is determined; and when the corresponding PID enable indicator has a second value and the corresponding PID masked by the corresponding PID mask does not match the input PID masked by the corresponding PID mask, a hit is determined.

In one embodiment, each register of the plurality of registers can be configured to store a corresponding DID and a corresponding DID select, the method can further comprise receiving an input DID, wherein the generating the output DID using the hit register can comprise: when the corresponding DID select of the hit register has a first value, the corresponding DID of the hit register can be provided as the output DID; and when the corresponding DID select of the hit register has a second value, the input DID can be provided as the output DID.

In one embodiment, each register of the plurality of registers can be configured to store a corresponding DID, the method can further comprise: when a hit is determined of multiple hit registers of the plurality of registers in which each register of the multiple hit registers indicates that the input PID is one of the set of PIDs identified by the register of the multiple hit registers, generating an output DID using the corresponding DID of each of the multiple hit registers.

The term "software" or "program," as used herein, is defined as a sequence of instructions designed for execution on a computer system. A program, or computer program, may include a subroutine, a function, a procedure, an object method, an object implementation, an executable application, an applet, a servlet, a source code, an object code, a shared library/dynamic load library and/or other sequence of instructions designed for execution on a computer system.

Some of the above embodiments, as applicable, may be implemented using a variety of different information processing systems. For example, although Figure 1 and the discussion thereof describe an exemplary information processing architecture, this exemplary architecture is presented merely to provide a useful reference in discussing various aspects of the disclosure. Of course, the description of the architecture has been simplified for purposes of discussion, and it is just one of many different types of appropriate architectures that may be used in accordance with the disclosure. Those skilled in the art will recognize that the boundaries between logic blocks are merely illustrative and that alternative embodiments may merge logic blocks or circuit elements or impose an alternate decomposition of functionality upon various logic blocks or circuit elements. Those skilled in the art will also recognize the specific use of the process identifier as used herein can be replaced with any other processor-controlled programmable identifier.

Thus, it is to be understood that the architectures depicted herein are merely exemplary, and that in fact many other architectures can be implemented which achieve the same functionality. In an abstract, but still definite sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

In one embodiment, system 100 is a computer system such as a server or personal computer system. Other embodiments may include different types of computer systems. Computer systems are information handling systems which can be designed to give independent computing power to one or more users. Computer systems may be found in many forms including but not limited to mainframes, minicomputers, servers, workstations, personal computers, notepads, personal digital assistants, electronic games, automotive and other embedded systems, cell phones and various other wireless devices. A typical computer system includes at least one processing unit, associated memory and a number of input/output (I/O) interfaces.

Although the disclosure is described herein with reference to specific embodiments, various modifications and changes can be made without departing from the scope of the present disclosure as set forth in the claims below. Accordingly, the specification and figures are to be regarded in an illustrative rather than a restrictive sense, and all such modifications are intended to be included within the scope of the claims. Any benefits, advantages, or solutions to problems that are described herein with regard to specific embodiments are not intended to be construed as a critical, required, or essential feature or element of any or all the claims.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to disclosures containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

## Claims

1. A resource domain controller(100) comprising:
a master domain assignment controller (104), MDAC, comprising a plurality of MDAC instances, wherein a first MDAC instance comprises:
a first plurality of registers (202) corresponding to a processor bus master (102), the first plurality of registers comprising a first register (202-0) corresponding to a first set of process identifiers, PIDs, and a second register (202-1) corresponding to a second set of PIDs;
comparison circuitry coupled to receive an input PID (PID_IN) from the processor and configured to determine if the input PID is one of the first set or the second set of PIDs, wherein:
when the input PID is one of the first set of PIDs, a first output domain identifier, DID, is generated, and
when the input PID is one of the second set of PIDs, a second output DID is generated, wherein the second output DID is different
from the first output DID; and
wherein a further MDAC instance comprises:
one or more registers (204) corresponding to a corresponding further non-processor bus master (102) coupled to the MDAC (104), and
corresponding comparison circuitry configured to generate a corresponding output DID using the one or more registers (204); and
wherein the resource domain controller further comprises:
a switch fabric (106) coupled to receive an output DID from the MDAC and coupled to a plurality of slaves (130,132,134), wherein the switch fabric (106) is configured to provide communication between the masters and the slaves.

2. The resource domain controller of claim 1, wherein the first register (202-0) is configured to store a first group identifier (PID, PIDM, PE) which identifies the first set of PIDs and the second register (202-1) is configured to store a second group identifier (PID, PIDM, PE) which identifies the second set of PIDs, wherein the comparison circuitry is configured to use the first group identifier to determine if the input PID is one of the first set of PIDs and the second group identifier to determine if the input PID is one of the second set of PIDs.

3. The resource domain controller of claim 2, wherein the first group identifier includes a first PID (PID) and a first PID mask (PIDM) , and the second group identifier includes a second PID (PID) and a second PID mask (PIDM), wherein the comparison circuitry is configured to use the first PID masked by the first PID mask to determine if the input PID is one of the first set of PIDs and the second PID masked by the second PID mask to determine if the input PID is one of the second set of PIDs.

4. The resource domain controller of any of claims 2 or 3, wherein the first group identifier includes a first PID enable indicator (PE), wherein the comparison circuitry is configured to:
when the first PID enable indicator (PE) has a first value, the input PID is one of the first set of PIDs if the first PID masked by the first PID mask matches the input PID masked by the first PID mask, and
when the first PID enable indicator (PE) has a second value, the input PID is one of the first set of PIDs if the first PID masked by the first PID mask does not match the input PID masked by the first PID mask.

5. The resource domain controller of any of claims 2 to 4, wherein the second group identifier is configured to store a second PID enable indicator (PE), wherein the comparison circuitry is configured to:
when the second PID enable indicator (PE) has the first value, the input PID is one of the second set of PIDs if the second PID (PID) masked by the second PID mask (PIDM) matches the input PID masked by the second PID mask, and
when the second PID enable indicator (PE) has the second value, the input PID is one of the second set of PIDs if the second PID (PID) masked by the second PID mask (PIDM) does not match the input PID masked by the second PID mask.

6. The resource domain controller of any of claims 2 to 5, wherein the first register (202-0) is configured to store a first DID and the second register (202-1) is configured to store a second DID, wherein:
when the input PID is one of the first set of PIDs, the first output DID is generated using the first DID, and
when the input PID is one of the second set of PIDs, the second output DID is generated using the second DID.

7. The resource domain controller of any of claims 2 to 6, wherein the first register (202-0) is configured to store a first DID and a first DID select and the second register (202-1) is configured to store a second DID and a second DID select, wherein:
when the input PID is one of the first set of PIDs, the first output DID is generated using the first DID select and at least one of the first DID and an input DID received from the processor, and
when the input PID is one of the second set of PIDs, the second output DID is generated using the second DID select and at least one of the second DID and the input DID.

8. The resource domain controller of claim 7, wherein:
when the input PID is one of the first set of PIDs and the first DID select has a first value, the first DID is provided as the first output domain identifier, and
when the input PID is one of the first set of PIDs and the first DID select has a second value, an input DID received from the processor is provided as the first output DID.

9. The resource domain controller of claim 8, wherein when the input PID is one of the first set of PIDs and the first DID select has a third value, a combination of the first DID and an input DID received from the processor is provided as the first output DID.

10. The resource domain controller of any preceding claim, wherein the processor provides a first input PID and an input DID to the MDAC, and an address and address attributes to the switch fabric, and the MDAC provides the first output DID to the switch fabric.

11. The resource domain controller of any preceding claim, wherein each group identifier of the first MDAC instance includes a PID and a PID mask, wherein the comparison circuitry determines which register of the plurality of registers results in a hit using the PIDs and PID masks.

12. The resource domain controller of claim 11, wherein each group identifier of the first MDAC instance includes a PID enable indicator, wherein the comparison circuitry determines which register of the plurality of registers (202-0, 202-1) results in a hit using the PIDs, the PID masks, and the PID enable indicators, wherein:
if the PID enable indicator stored in one of the plurality of registers has a first value, the PID stored in the respective register masked by the PID mask stored in the respective register matches the first input PID masked by the PID mask stored in the respective register, and
if the PID enable indicator stored in one of the plurality of registers has a second value, the PID stored in the respective register masked by the PID mask stored in the respective register does not match the first input PID masked by the PID mask stored in the respective register.

13. The resource domain controller of any preceding claim, wherein each register of the plurality of registers (202-0, 202-1) of the first MDAC instance is configured to store a DID and a DID select (DIDS), wherein the first output DID is generated using the DID select (DIDS) stored in the respective register and at least one of the DID stored in the respective register and an input DID received from the processor.

## Patentansprüche

1. Betriebsmittelbereichssteuereinheit (100), die Folgendes umfasst:
eine Hauptbereichszuweisungssteuereinheit (104), MDAC, die mehrere MDAC-Instanzen umfasst, wobei eine erste MDAC-Instanz Folgendes umfasst:
mehrere erste Register (202), die einem Prozessorbushauptgerät (102) entsprechen, wobei die mehreren ersten Register ein erstes Register (202-0), das einer ersten Gruppe von Prozesskennungen, PIDs, entspricht, und ein zweites Register (202-1), das einer zweiten Gruppe von PIDs entspricht, umfassen;
eine Vergleichsschaltung, die angekoppelt ist, um eine Eingangs-PID (PID_IN) von dem Prozessor zu empfangen, und konfiguriert ist, zu bestimmen, ob die Eingangs-PID eine der ersten Gruppe oder der zweiten Gruppe von PIDs ist, wobei:
dann, wenn die Eingangs-PID eine der ersten Gruppe von PIDs ist, eine erste Ausgangsbereichskennung, DID, erzeugt wird, und
dann, wenn die Eingangs-PID eine der zweiten Gruppe von PIDs ist, eine zweite Ausgangs-DID erzeugt wird, wobei die zweite Ausgangs-DID von der ersten Ausgangs-DID verschieden ist; und
wobei eine weitere MDAC-Instanz Folgendes umfasst:
ein oder mehrere Register (204), die einem entsprechenden weiteren Nicht-Prozessor-Bushauptgerät (102) entsprechen, das an die MDAC (104) gekoppelt ist, und
eine entsprechende Vergleichsschaltung, die konfiguriert ist, eine entsprechende Ausgangs-DID unter Verwendung des einen oder der mehreren Register (204) zu erzeugen; und
wobei die Betriebsmittelbereichssteuereinheit ferner Folgendes umfasst:
eine Schalterstruktur (106), die angekoppelt ist, um eine Ausgangs-DID von der MDAC zu empfangen, und an mehrere Folgegeräte (130, 132, 134) gekoppelt ist, wobei die Schalterstruktur (106) konfiguriert ist, eine Kommunikation zwischen den Hauptgeräten und den Folgegeräten bereitzustellen.

2. Betriebsmittelbereichssteuereinheit nach Anspruch 1, wobei das erste Register (202-0) konfiguriert ist, eine erste Gruppenkennung (PID, PIDM, PE) zu speichern, die die erste Gruppe von PIDs identifiziert, und das zweite Register (202-1) konfiguriert ist, eine zweite Gruppenkennung (PID, PIDM, PE) zu speichern, die die zweite Gruppe von PIDs identifiziert, wobei die Vergleichsschaltung konfiguriert ist, die erste Gruppenkennung zu verwenden, um zu bestimmen, ob die Eingangs-PID eine der ersten Gruppe von PIDs ist und die zweite Gruppenkennung, um zu bestimmen, ob die Eingangs-PID eine der zweiten Gruppe von PIDs ist.

3. Betriebsmittelbereichssteuereinheit nach Anspruch 2, wobei die erste Gruppenkennung eine erste PID (PID) und eine erste PID-Maske (PIDM) enthält und die zweite Gruppenkennung eine zweite PID (PID) und eine zweite PID-Maske (PIDM) enthält, wobei die Vergleichsschaltung konfiguriert ist, die erste PID, die durch die erste PID-Maske maskiert ist, zu verwenden, um zu bestimmen, ob die Eingangs-PID eine der ersten Gruppe von PIDs ist, und die zweite PID, die durch die zweite PID-Maske maskiert ist, um zu bestimmen, ob die Eingangs-PID eine der zweiten Gruppe von PIDs ist.

4. Betriebsmittelbereichssteuereinheit nach einem der Ansprüche 2 oder 3, wobei die erste Gruppenkennung einen ersten PID-Aktivierungsindikator (PE) enthält, wobei die Vergleichsschaltung konfiguriert ist zum:
dann, wenn der erste PID-Aktivierungsindikator (PE) einen ersten Wert aufweist, die Eingangs-PID eine der ersten Gruppe von PIDs ist, wenn die erste PID, die durch die erste PID-Maske maskiert ist, mit der Eingangs-PID, die durch die erste PID-Maske maskiert ist, übereinstimmt, und
dann, wenn der erste PID-Aktivierungsindikator (PE) einen zweiten Wert aufweist, die Eingangs-PID eine der ersten Gruppe von PIDs ist, wenn die erste PID, die durch die erste PID-Maske maskiert ist, nicht mit der Eingangs-PID, die durch die erste PID-Maske maskiert ist, übereinstimmt.

5. Betriebsmittelbereichssteuereinheit nach einem der Ansprüche 2 bis 4, wobei die zweite Gruppenkennung konfiguriert ist, einen zweiten PID-Aktivierungsindikator (PE) zu speichern, wobei die Vergleichsschaltung konfiguriert ist zum:
dann, wenn der zweite PID-Aktivierungsindikator (PE) den ersten Wert aufweist, die Eingangs-PID eine der zweiten Gruppe von PIDs ist, wenn die zweite PID (PID), die durch die zweite PID-Maske (PIDM) maskiert ist, mit der Eingangs-PID, die durch die zweite PID-Maske maskiert ist, übereinstimmt, und
dann, wenn der zweite PID-Aktivierungsindikator (PE) den zweiten Wert aufweist, die Eingangs-PID eine der zweiten Gruppe von PIDs ist, wenn die zweite PID (PID), die durch die zweite PID-Maske (PIDM) maskiert ist, nicht mit der Eingangs-PID, die durch die zweite PID-Maske maskiert ist, übereinstimmt.

6. Betriebsmittelbereichssteuereinheit nach einem der Ansprüche 2 bis 5, wobei das erste Register (202-0) konfiguriert ist, eine erste DID zu speichern, und das zweite Register (202-1) konfiguriert ist, eine zweite DID zu speichern, wobei:
dann, wenn die Eingangs-PID eine der ersten Gruppe von PIDs ist, die erste Ausgangs-DID unter Verwendung der ersten DID erzeugt wird, und
dann, wenn die Eingangs-PID eine der zweiten Gruppe von PIDs ist, die zweite Ausgangs-DID unter Verwendung der zweiten DID erzeugt wird.

7. Betriebsmittelbereichssteuereinheit nach einem der Ansprüche 2 bis 6, wobei das erste Register (202-0) konfiguriert ist, eine erste DID und eine erste DID-Auswahl zu speichern, und das zweite Register (202-1) konfiguriert ist, eine zweite DID und eine zweite DID-Auswahl zu speichern, wobei:
dann, wenn die Eingangs-PID eine der ersten Gruppe von PIDs ist, die erste Ausgangs-DID unter Verwendung der ersten DID-Auswahl und der ersten DID und/oder einer von dem Prozessor empfangenen Eingangs-DID erzeugt wird, und
dann, wenn die Eingangs-PID eine der zweiten Gruppe von PIDs ist, die zweite Ausgangs-DID unter Verwendung der zweiten DID-Auswahl und der zweiten DID und/oder der Eingangs-DID erzeugt wird.

8. Betriebsmittelbereichssteuereinheit nach Anspruch 7, wobei:
dann, wenn die Eingangs-PID eine der ersten Gruppe von PIDs ist und die erste DID-Auswahl einen ersten Wert aufweist, die erste DID als die erste Ausgangsbereichskennung bereitgestellt wird, und
dann, wenn die Eingangs-PID eine der ersten Gruppe von PIDs ist und die erste DID-Auswahl einen zweiten Wert aufweist, eine von dem Prozessor empfangene DID als die erste Ausgangs-DID bereitgestellt wird.

9. Betriebsmittelbereichssteuereinheit nach Anspruch 8, wobei dann, wenn die Eingangs-PID eine der ersten Gruppe von PIDs ist und die erste DID-Auswahl einen dritten Wert aufweist, eine Kombination der ersten DID und einer von dem Prozessor empfangenen Eingangs-DID als die erste Ausgangs-DID bereitgestellt wird.

10. Betriebsmittelbereichssteuereinheit nach einem vorhergehenden Anspruch, wobei der Prozessor eine erste Eingangs-PID und eine Eingangs-DID an die MDAC und eine Adresse und Adressenattribute an die Schalterstruktur liefert und die MDAC die erste Ausgangs-DID an die Schalterstruktur liefert.

11. Betriebsmittelbereichssteuereinheit nach einem vorhergehenden Anspruch, wobei jede Gruppenkennung der ersten MDAC-Instanz eine PID und eine PID-Maske enthält, wobei die Vergleichsschaltung bestimmt, welches Register der mehreren Register einen Treffer unter Verwendung der PIDs und PID-Masken ergibt.

12. Betriebsmittelbereichssteuereinheit nach Anspruch 11, wobei jede Gruppenkennung der ersten MDAC-Instanz einen PID-Aktivierungsindikator enthält, wobei die Vergleichsschaltung bestimmt, welches Register der mehreren Register (202-0, 202-1) einen Treffer unter Verwendung der PIDs, der PID-Masken und der PID-Aktivierungsindikatoren ergibt, wobei:
dann, wenn der in einem der mehreren Register gespeicherte PID-Aktivierungsindikator einen ersten Wert aufweist, die in dem jeweiligen Register gespeicherte PID, die durch die in dem jeweiligen Register gespeicherte PID-Maske maskiert ist, mit der ersten Eingangs-PID, die durch die in dem jeweiligen Register gespeicherte PID-Maske maskiert ist, übereinstimmt, und
dann, wenn der in einem der mehreren Register gespeicherte PID-Aktivierungsindikator einen zweiten Wert aufweist, die in dem jeweiligen Register gespeicherte PID, die durch die in dem jeweiligen Register gespeicherte PID-Maske maskiert ist, nicht mit der ersten Eingangs-PID, die durch die in dem jeweiligen Register gespeicherte PID-Maske maskiert ist, übereinstimmt.

13. Betriebsmittelbereichssteuereinheit nach einem vorhergehenden Anspruch, wobei jedes Register der mehreren Register (202-0, 202-1) der ersten MDAC-Instanz konfiguriert ist, eine DID und eine DID-Auswahl (DIDS) zu speichern, wobei die erste Ausgangs-DID unter Verwendung der DID-Auswahl (DIDS), die in dem jeweiligen Register gespeichert ist, und der in dem jeweiligen Register gespeicherten DID und/oder einer von dem Prozessor empfangenen Eingangs-DID erzeugt wird.

## Revendications

1. Contrôleur de domaine de ressources (100) comprenant :
un contrôleur d'affectation de domaine maître (104), MDAC, comprenant une pluralité d'instances de MDAC, dans lequel une première instance de MDAC comprend :
une première pluralité de registres (202) correspondant à un maître de bus de processeur (102), la première pluralité de registres comprenant un premier registre (202-0) correspondant à un premier ensemble d'identificateurs de processus, PID, et un deuxième registre (202-1) correspondant à un deuxième ensemble de PID ;
un circuit de comparaison couplé pour recevoir un PID d'entrée (PID_IN) en provenance du processeur et configuré pour déterminer si le PID d'entrée est l'un du premier ensemble ou du deuxième ensemble de PID, dans lequel :
lorsque le PID d'entrée est l'un du premier ensemble de PID, un premier identificateur de domaine, DID, de sortie est généré, et
lorsque le PID d'entrée est l'un du deuxième ensemble de PID, un deuxième DID de sortie est généré, dans lequel le deuxième DID de sortie est différent du premier DID de sortie ; et
dans lequel une autre instance de MDAC comprend :
un ou plusieurs registres (204) correspondant à un autre maître de bus non-processeur correspondant (102) couplé au MDAC (104), et
des circuits de comparaison correspondants configurés pour générer un DID de sortie correspondant en utilisant lesdits un ou plusieurs registres (204) ; et
dans lequel le contrôleur de domaine de ressources comprend en outre :
une matrice de commutation (106) couplée pour recevoir un DID de sortie en provenance du MDAC et couplée à une pluralité d'esclaves (130, 132, 134), dans lequel la matrice de commutation (106) est configurée pour assurer une communication entre les maîtres et les esclaves.

2. Contrôleur de domaine de ressources selon la revendication 1, dans lequel le premier registre (202-0) est configuré pour stocker un premier identificateur de groupe (PID, PIDM, PE) qui identifie le premier ensemble de PID et le deuxième registre (202-1) est configuré pour stocker un deuxième identificateur de groupe (PID, PIDM, PE) qui identifie le deuxième ensemble de PID, dans lequel le circuit de comparaison est configuré pour utiliser le premier identificateur de groupe pour déterminer si le PID d'entrée est l'un du premier ensemble de PID et le deuxième identificateur de groupe pour déterminer si le PID d'entrée est l'un du deuxième ensemble de PID.

3. Contrôleur de domaine de ressources selon la revendication 2, dans lequel le premier identificateur de groupe comprend un premier PID (PID) et un premier masque de PID (PIDM), et le deuxième identificateur de groupe comprend un deuxième PID (PID) et un deuxième masque de PID (PIDM), dans lequel le circuit de comparaison est configuré pour utiliser le premier PID masqué par le premier masque de PID pour déterminer si le PID d'entrée est l'un du premier ensemble de PID et le deuxième PID masqué par le deuxième masque de PID pour déterminer si le PID d'entrée est l'un du deuxième ensemble de PID.

4. Contrôleur de domaine de ressources selon l'une quelconque des revendications 2 ou 3, dans lequel le premier identificateur de groupe comprend un premier indicateur d'activation de PID (PE), dans lequel les circuits de comparaison sont configurés de telle sorte que :
lorsque le premier indicateur d'activation de PID (PE) a une première valeur, le PID d'entrée est l'un du premier ensemble de PID si le premier PID masqué par le premier masque de PID concorde avec le PID d'entrée masqué par le premier masque de PID, et
lorsque le premier indicateur d'activation de PID (PE) a une deuxième valeur, le PID d'entrée est l'un du premier ensemble de PID si le premier PID masqué par le premier masque de PID ne concorde pas avec le PID d'entrée masqué par le premier masque de PID.

5. Contrôleur de domaine de ressources selon l'une quelconque des revendications 2 à 4, dans lequel le deuxième identificateur de groupe est configuré pour stocker un deuxième indicateur d'activation de PID (PE), dans lequel les circuits de comparaison sont configurés de telle sorte que :
lorsque le deuxième indicateur d'activation de PID (PE) a la première valeur, le PID d'entrée est l'un du deuxième ensemble de PID si le deuxième PID (PID) masqué par le deuxième masque de PID (PIDM) concorde avec le PID d'entrée masqué par le deuxième masque de PID, et
lorsque le deuxième indicateur d'activation de PID (PE) a la deuxième valeur, le PID d'entrée est l'un du deuxième ensemble de PID si le deuxième PID (PID) masqué par le deuxième masque de PID (PIDM) ne concorde pas avec le PID d'entrée masqué par le deuxième masque de PID.

6. Contrôleur de domaine de ressources selon l'une quelconque des revendications 2 à 5, dans lequel le premier registre (202-0) est configuré pour stocker un premier DID et le deuxième registre (202-1) est configuré pour stocker un deuxième DID, dans lequel :
lorsque le PID d'entrée est l'un du premier ensemble de PID, le premier DID de sortie est généré en utilisant le premier DID, et
lorsque le PID d'entrée est l'un du deuxième ensemble de PID, le deuxième DID de sortie est généré en utilisant le deuxième DID.

7. Contrôleur de domaine de ressources selon l'une quelconque des revendications 2 à 6, dans lequel le premier registre (202-0) est configuré pour stocker un premier DID et une première sélection de DID et le deuxième registre (202-1) est configuré pour stocker un deuxième DID et une deuxième sélection de DID, dans lequel :
lorsque le PID d'entrée est l'un du premier ensemble de PID, le premier DID de sortie est généré en utilisant la première sélection de DID et au moins l'un du premier DID et d'un DID d'entrée reçu en provenance du processeur, et
lorsque le PID d'entrée est l'un du deuxième ensemble de PID, le deuxième DID de sortie est généré en utilisant la deuxième sélection de DID et au moins l'un du deuxième DID et du DID d'entrée.

8. Contrôleur de domaine de ressources selon la revendication 7, dans lequel :
lorsque le PID d'entrée est l'un du premier ensemble de PID et que la première sélection de DID a une première valeur, le premier DID est fourni en tant que premier identificateur de domaine de sortie, et
lorsque le PID d'entrée est l'un du premier ensemble de PID et que la première sélection de DID a une deuxième valeur, un DID d'entrée reçu en provenance du processeur est fourni en tant que premier DID de sortie.

9. Contrôleur de domaine de ressources selon la revendication 8, dans lequel, lorsque le PID d'entrée est l'un du premier ensemble de PID et que la première sélection de DID a une troisième valeur, une combinaison du premier DID et d'un DID d'entrée reçu en provenance du processeur est fournie en tant que premier DID de sortie.

10. Contrôleur de domaine de ressources selon l'une quelconque des revendications précédentes, dans lequel le processeur fournit un premier PID d'entrée et un DID d'entrée au MDAC, et une adresse et des attributs d'adresse à la matrice de commutation, et le MDAC fournit le premier DID de sortie à la matrice de commutation.

11. Contrôleur de domaine de ressources selon l'une quelconque des revendications précédentes, dans lequel chaque identificateur de groupe de la première instance de MDAC comprend un PID et un masque de PID, dans lequel les circuits de comparaison déterminent quel registre de la pluralité de registres conduit à une réussite en utilisant les PID et les masques de PID.

12. Contrôleur de domaine de ressources selon la revendication 11, dans lequel chaque identificateur de groupe de la première instance de MDAC comprend un indicateur d'activation de PID, dans lequel les circuits de comparaison déterminent quel registre de la pluralité de registres (202-0, 202-1) conduit à une réussite en utilisant les PID, les masques de PID et les indicateurs de validation de PID, dans lequel :
si l'indicateur d'activation de PID stocké dans l'un de la pluralité de registres a une première valeur, le PID stocké dans le registre respectif masqué par le masque de PID stocké dans le registre respectif concorde avec le premier PID d'entrée masqué par le masque de PID stocké dans le registre respectif, et
si l'indicateur d'activation de PID stocké dans l'un de la pluralité de registres a une deuxième valeur, le PID stocké dans le registre respectif masqué par le masque de PID stocké dans le registre respectif ne concorde pas avec le premier PID d'entrée masqué par le masque de PID stocké dans le registre respectif.

13. Contrôleur de domaine de ressources selon l'une quelconque des revendications précédentes, dans lequel chaque registre de la pluralité de registres (202-0, 202-1) de la première instance de MDAC est configuré pour stocker un DID et une sélection de DID (DIDS), dans lequel le premier DID de sortie est généré en utilisant la sélection de DID (DIDS) stockée dans le registre respectif et au moins l'un des DID stockés dans le registre respectif et un DID d'entrée reçu en provenance du processeur.
